# EUROPÄISCHE PATENTANMELDUNG

(11) **EP 1 130 289 A2**
(43) Veröffentlichungstag der Anmeldung: **05.09.2001**
(21) Anmeldenummer: 01104324.7
(22) Anmeldetag: 23.02.2001
(51) Int. Cl.: F16H 48/30

(54) **Fahrzeugachse**

(30) Priorität: 02.03.2000 DE 10010292
(71) Anmelder: ZF FRIEDRICHSHAFEN Aktiengesellschaft, 88038 Friedrichshafen (DE)
(72) Erfinder: Friedl, Reinhard, 94146 Hinterschmiding (DE)

(57) **Zusammenfassung**

Die Erfindung geht von einer angetriebene Fahrzeugachse mit einem in eine Achsbrücke (1) eingesetztes Differenzialgetriebe (2) und mit mindestens einem Differenzialsperrenmodul (16, 17) aus, das koaxial zu einer Achswelle (9, 10) angeordnet und mittels radial gerichteter Bolzen (24, 46) in der Achsbrücke (1) gehalten ist und dessen Sperrelemente (28, 29, 39, 40) über Mitnahmeeinrichtungen (26, 27, 37, 38) einerseits mit einem Differenzialkorb (4) und andererseits mit Kegelrädern (11, 12) des Differenzialgetriebes (2) lösbar direkt oder indirekt verbunden sind und durch einen hydraulisch betätigten Ringkolben (21) in Sperrstellung gerückt werden können, wobei der Ringkolben (21) in einem Zylindergehäuse (20) des Differenzialsperrenmoduls (16, 17) axial verschiebbar geführt ist und über ein Axiallager (22) auf die Sperrelemente (28, 29, 39, 40) wirkt.
Es wird vorgeschlagen, dass das Zylindergehäuse (20) die Sperrelemente (28, 29) axial übergreift und die auf die Sperrelemente (28, 29) wirkenden Betätigungskräfte über ein zweites Axiallager (30) abstützt.

## Beschreibung

Die Erfindung betrifft eine Fahrzeugachse nach dem Oberbegriff von Anspruch 1.

Aus der DE 42 02 595 C2 ist eine gattungsgemäße angetriebene Fahrzeugachse bekannt, bei der in eine Achsbrücke ein Differenzialgetriebe eingesetzt ist. Das Differenzialgetriebe besteht im wesentlichen aus einem Differenzialkorb, in dem Ausgleichskegelräder auf Lagerbolzen gelagert sind. Der Differenzialkorb wird über ein äußeres Kegelrad von einem Kegelritzel angetrieben, das auf einer Antriebswelle befestigt ist. Die Ausgleichsräder kämmen mit Kegelrädern, die auf Achswellen drehfest montiert sind. Der Differenzialkorb ist mittels Kegelrollenlager in der Achsbrükke gelagert.

Die Fahrzeugachse kann mit einem Differenzialsperrenmodul nachgerüstet bzw. umgerüstet werden. Das Differenzialsperrenmodul ist einseitig zum Differenzialgetriebe und koaxial zu einer Achswelle angeordnet und besteht im wesentlichen aus einem einstückigen Kupplungsgehäuse, einem Lamellenscheibenpaket, einem Druckring, einem Axiallager, einem Ringkolben und einem Ringzylinder. Die in der vorstehend angegebenen Reihenfolge zusammengebauten Teile bilden ein vormontiertes Differenzialsperrenmodul, das auf sehr einfache Weise und schnell in eine Fahrzeugachse an ein nach- bzw. umrüstbares Differenzialgetriebe angebaut werden kann. Das Differenzialsperrenmodul erlaubt es, dass es entweder bereits vormontiert auf der zugehörigen, zu einem Rad führenden Achswelle zusammen mit dieser bei der Endmontage in das Differenzialgetriebe einführbar ist oder zunächst isoliert am Differenzialkorb anbaubar ist und erst dann die zugehörige Achswelle hindurch geschoben wird. Hierbei werden die Lamellenscheiben der Innenlamellen der Reihe nach auf eine Mitnahmeverzahnung der Achswelle aufgefädelt, während das als äußerer Lamellenträger dienende Kupplungsgehäuse eine Stirnklauenkupplung aufweist, deren eines Kupplungsteil drehfest mit dem Differenzialkorb verbunden ist. Somit besteht das Differenzialsperrenmodul aus drei zum Teil lose zusammengefügten Baugruppen, nämlich aus dem Ringzylinder mit dem Ringkolben, dem Kupplungsgehäuse mit dem Lamellenpaket und der Klauenkupplung. Die beiden zuerst genannten Baugruppen werden im vormontierten Zustand nur durch die Achswelle zusammengehalten.

Der Ringkolben ist durch Formschlußführungen axial verschiebbar aber nicht drehbar im Ringzylinder geführt, der seinerseits axial und radial durch Fixierungsschrauben in der Achsbrücke gehalten ist. Zum Justieren des Ringzylinders sind Ringsegmente oder Beilagescheiben oder ein Zwischenring vorgesehen. Eine der Fixierungsschrauben, die diametral zur Achswelle angeordnet sind, besitzt eine Anschlußbohrung und ein Anschlußgewinde für Druckleitungen, durch die ein Druckmedium zum Ringkolben geführt wird und ihn im Bedarfsfall beaufschlagt.

Der Ringkolben wirkt über ein Axiallager und eine als Druckscheibe ausgebildete Endlamelle auf das Lamellenpaket. Die hydraulisch aufgebrachten Betätigungskräfte stützen sich einerseits über den Ringzylinder und die Fixierschrauben an der Achsbrücke und andererseits über das Kupplungsgehäuse und die Stirnklauenverzahnung an einem Kegelrollenlager des Differenzialkorbs ab. Dadurch werden sowohl die Zentrierschrauben mit der Druckmittelzuführung als auch die Kegelrollenlager durch die Betätigungskräfte hoch belastet. An der Stirnseite, die dem Ringkolben gegenüberliegt, wirkt eine Druckfeder auf das Lamellenpaket und bewirkt einerseits, dass der Ringkolben zurückgestellt wird und andererseits, dass bei drucklosem Hydrauliksystem ständig eine kleine Friktionskraft zwischen den einzelnen Lamellen und damit ein kleines Sperrmoment besteht.

In der gleichen Schrift ist auf die GB-PS 12 24 034 hingewiesen, die eine Fahrzeugachse mit einem Differenzialgetriebe beschreibt. Hierbei sind zur Sperrung des Differenzialgetriebes zwei Sperreinrichtungen vorgesehen, die gleich ausgebildet und spiegelsymmetrisch beiderseits des Differenzialkorbs angeordnet sind.

Der Erfindung liegt die Aufgabe zugrunde, die Montage eines Differenzialsperrenmodul zu vereinfachen und sicherer zu gestalten. Sie wird gemäß der Erfindung durch die Merkmale des Anspruchs 1 gelöst. Weitere Ausgestaltungen ergeben sich aus den Unteransprüchen.

Nach der Erfindung übergreift das Zylindergehäuse die Sperrelemente axial und stützt die auf die Sperrelemente wirkenden Betätigungskräfte über ein zweites Axiallager ab. Dadurch werden die Axialkräfte im Zylindergehäuse aufgenommen und belasten weder die Lager des Differenzialgetriebes noch die Bolzen, mit denen das Zylindergehäuse in der Achsbrücke gehalten wird. Somit besteht keine Gefahr, dass sich die Bolzen im Laufe der Zeit lockern oder brechen oder die Anschlüsse für das Druckmedium undicht werden. Dies ist besonders wichtig, wenn die Sperrelemente kraftschlüssige Elemente, z.B. Lamellen, sind, da hierbei die Betätigungskräfte besonders groß sind. Demgegenüber sind die Betätigungskräfte bei formschlüssigen Sperrelementen, z.B. in Form von Schaltklauen, sehr gering, so dass bei solchen Sperrmodulen ein zweites Drucklager entfallen kann, zumal nach dem Schaltvorgang im geschlossenen Zustand keine nennenswerten Haltekräfte mehr erforderlich sind. Entsprechend ist das Zylindergehäuse kürzer ausgelegt und übergreift die Schaltklauen nicht.

Das Differenzialsperrenmodul, nämlich das Zylindergehäuse, der Ringkolben, die Drucklager und die Lamellenträger mit den Lamellen können zu einer einzigen Baueinheit vormontiert werden und als solche in die Achsbrücke eingesetzt werden. Dabei ist es vorteilhaft, dass auch die Innenlamellen auf einem separaten Lamellenträger geführt sind, da so die Achswelle leichter durch das Differenzialsperrenmodul geführt werden kann und über eine Mitnahmeverzahnung drehfest mit dem inneren Lamellenträger verbunden werden kann.

Bei formschlüssigen Sperrelementen ist es nicht erforderlich, dass das Zylindergehäuse die Sperrklauen axial übergreift. In diesem Fall wird der Ringzylinder mit dem Kolben, dem Drucklager und einem Klauenträger auf einer Achswelle vormontiert und zwischen zwei Anschlägen gehalten, wobei sich eine Rückstellfeder an einer Anschlagscheibe abstützt und über einen Klauenträger und ein Axiallager auf den Ringkolben wirkt. Der andere Klauenträger sitzt über eine Mitnahmeverzahnung drehfest am Differenzialkorb.

In der Regel reicht es aus, dass ein Differenzialsperrenmodul vorgesehen ist. Um große Sperrmomente zu erreichen, kann es jedoch zweckmäßig sein, zwei Differenzialsperrenmodule symmetrisch zum Differenzialgetriebe anzuordnen. Ferner wird gemäß einer Ausgestaltung der Erfindung vorgeschlagen, dass der Ringkolben über Hebel auf die Sperrelemente wirkt. Dies ist vor allem bei kraftschlüssigen Sperrelementen von Bedeutung, um durch die Hebelübersetzung die hydraulischen Betätigungskräfte zu verstärken. Dadurch kann der Betätigungsdruck und/oder die wirksame Fläche des Ringkolbens reduziert werden.

Gemäß einer weiteren Ausgestaltung der Erfindung sind die Bolzen in Paßbohrungen des Zylindergehäuses dichtend eingesetzt und über einen Flansch an der Achsbrücke befestigt. Als Dichtungen können radial wirkende Rundgummiringe verwendet werden, da die Kräfte sehr gering sind, die von den Bolzen aufgenommen werden müssen. Wegen der geringen Abstützkräfte kann insbesondere bei formschlüssigen Sperrelementen auf eine Verdrehsicherung zwischen dem Zylindergehäuse und dem Ringkolben verzichtet werden. Da die Bolzen das Zylindergehäuse radial und axial präzise führen, sind keine besonderen Einstellelemente wie Fixierschrauben oder Beilagescheiben erforderlich.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teillängsschnitt durch eine erfindungsgemäße Fahrzeugachse mit zwei Differenzialsperrenmodulen,
- Fig. 2: eine Variante zu Fig. 1 mit einer Hebelübersetzung im Betätigungsmechanismus,
- Fig. 3: eine Variante zu Fig. 1 mit einer Klauensperre und

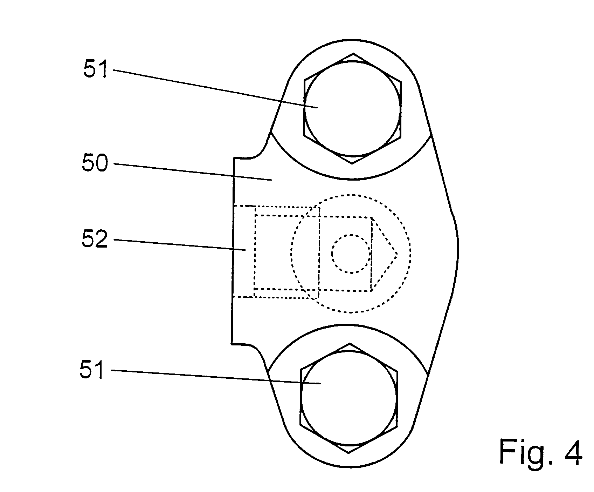

- Fig. 4: eine Ansicht in Richtung eines Pfeils IV in Fig. 3.

In einer Achsbrücke 1 ist ein Differenzialgetriebe 2 angeordnet. Dieses besitzt einen Differenzialkorb 4, der über Wälzlager 7 und 8 in einem Lagergehäuse 3 gelagert ist, das mit der Achsbrücke 1 verschraubt ist.

Ein Kegelritzel 6 treibt ein Außenkegelzahnrad 5 an, das mit dem Differenzialkorb 4 verschraubt ist. Im Differenzialkorb 4 sind auf Lagerbolzen 15 Ausgleichskegelräder 13 und 14 gelagert. In der Regel werden mindestens vier Ausgleichskegelräder 13, 14 vorgesehen. Die Ausgleichskegelräder 13, 14 kämmen mit Kegelrädern 11 und 12, die drehfest auf Achswellen 9 bzw. 10 angeordnet sind.

Koaxial zu den Achswellen 9, 10 sind Differenzialsperrenmodule 16, 17 vorgesehen, die gleich gestaltet und spiegelsymmetrisch zum Differenzialgetriebe 2 angeordnet sind. Wegen der besseren Übersichtlichkeit und Verständlichkeit sind nur für das Differenzialsperrenmodul 16 Bezugszeichen für die einzelnen Bauteile eingetragen.

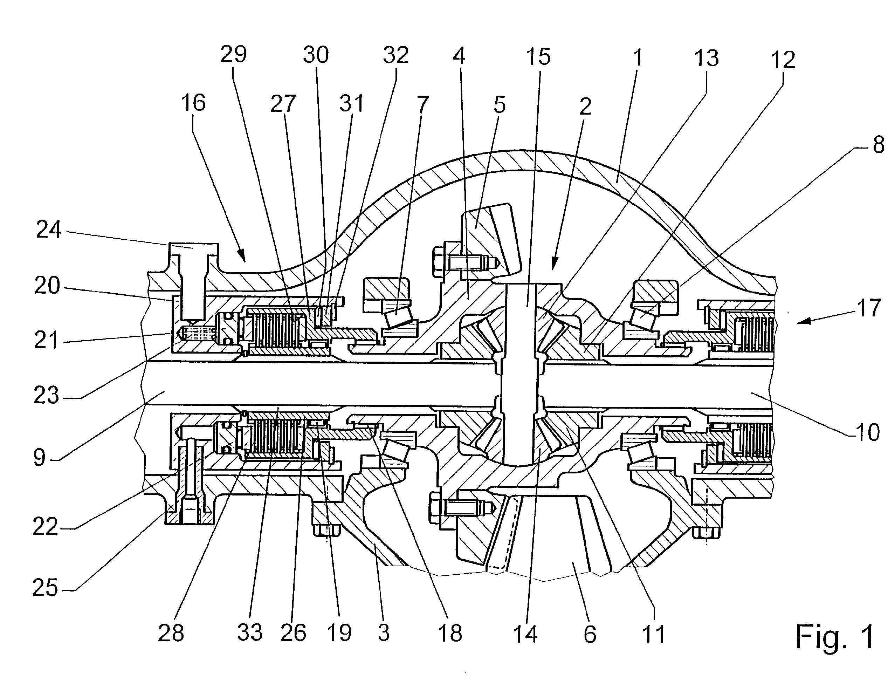

Das Differenzialsperrenmodul 16 nach Fig. 1 besitzt ein Zylindergehäuse 20, das axial und radial durch diametral zur Achswelle 9 angeordnete Bolzen 24, 25 gehalten ist, wobei der Bolzen 25 als Anschlußschraube ausgebildet ist, um Druckmittel in das Zylindergehäuse 20 zu einem axial verschiebbaren Ringkolben 21 zu leiten.

Der Ringkolben 21 wirkt über ein Axiallager 22 auf Innenlamellen 28 und Außenlamellen 29, die in axialer Richtung wechselweise drehfest, aber axial verschiebbar mit einem inneren Lamellenträger 26 bzw. einem äußeren Lamellenträger 27 verbunden sind. Dabei sind die Endlamellen verstärkt als Druckscheiben ausgebildet. Der innere Lamellenträger 26 ist drehfest über eine Mitnahmeverzahnung 33 mit der Achswelle 9 verbunden, während der äußere Lamellenträger 27 über eine Mitnahmeverzahnung 18 mit dem Differenzialkorb 4 verbunden ist und sich über ein Radiallager 19 am inneren Lamellenträger 26 abstützt.

Das Zylindergehäuse 20 übergreift die Lamellen 28, 29 und den äußeren Lamellenträger 27 so weit, dass dieser sich über ein zweites Axiallager 30, eine Scheibe 31 und einen Sicherungsring 32 am Zylindergehäuse 20 abstützt. Somit werden die Betätigungskräfte im Zylindergehäuse 20 aufgenommen und wirken nicht auf die Lagerung 7, 8 des Differenzialgetriebes 2 oder auf den Bolzen 24 bzw. die Anschlußschraube 25. Auf den Ringkolben 21 wirken mehrere auf den Umfang verteilte Federn 23, die so ausgelegt sind, dass das Differenzialsperrenmodul 16 ein Grundsperrmoment erzeugt, wenn das Hydrauliksystem drucklos ist. Da somit die Lamellen 28 und 29 stets aneinander anliegen, ist die Ansprechzeit der hydraulischen Betätigung sehr kurz und das Ansprechverhalten sehr feinfühlig.

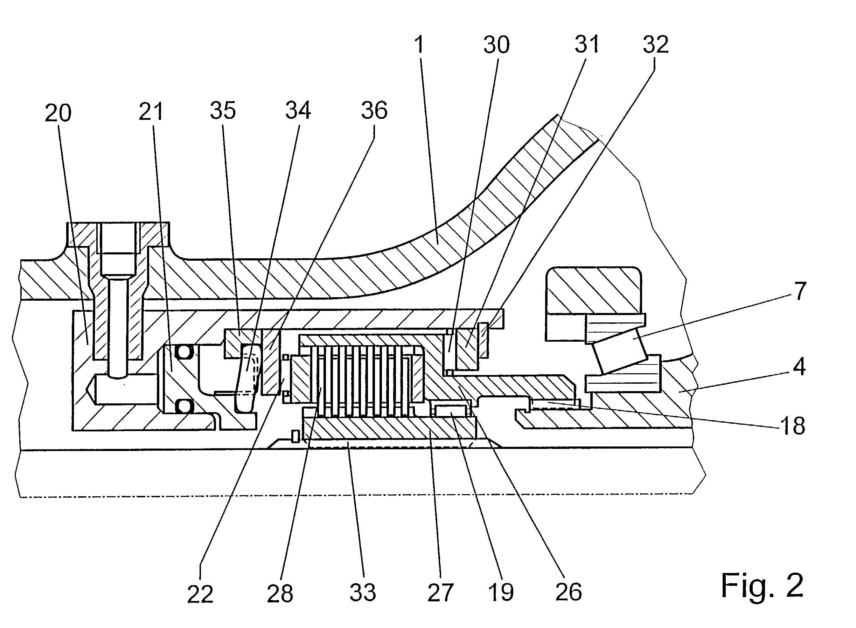

Die Variante nach Fig. 2 unterscheidet sich von der Ausführung nach Fig. 1 durch mehrere auf den Umfang verteilte Hebel 34, die zwischen dem Ringkolben 21 und einer Lagerscheibe 36 des Axiallagers 22 angeordnet sind und von einem Stützring 35 gehalten werden. Die Anlage- und Abstützpunkte der Hebel 34 sind so gewählt, dass ein gewünschtes Übersetzungsverhältnis erzeugt wird, wodurch der Betätigungsdruck und/oder die wirksame Kolbenfläche des Ringkolbens 21 reduziert werden können.

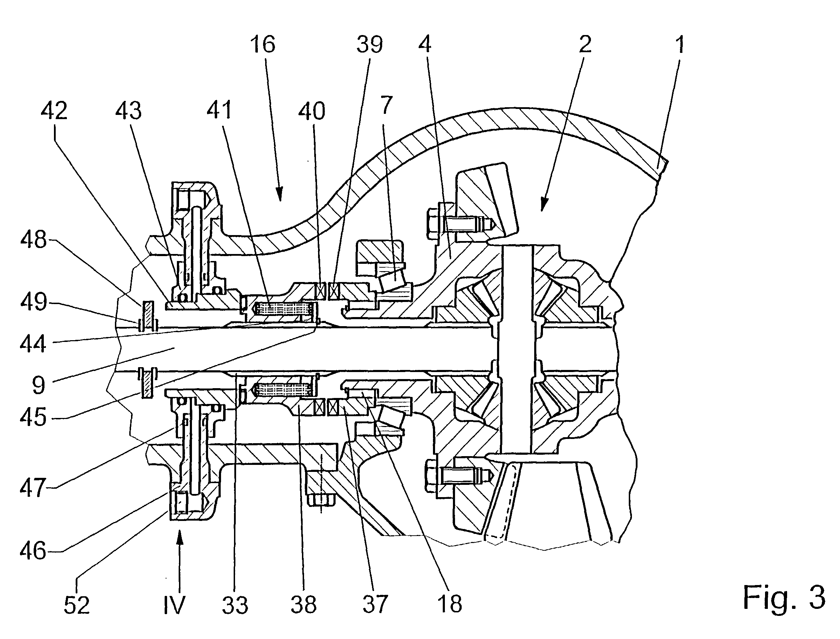

Die Variante nach Fig. 3 zeigt formschlüssige Sperrelemente in Form von stirnseitig an Klauenträgern 37, 38 angebrachten Klauen 39, 40. Der Klauenträger 37 mit den Klauen 39 ist über die Mitnahmeverzahnung 18 mit dem Differenzialkorb 4 verbunden, während der Klauenträger 38 mit den Klauen 40 über die Mitnahmeverzahnung 33 mit der Achswelle 9 drehfest, aber axial verschiebbar verbunden ist. Er stützt sich über eine Rückstellfeder 41 an einer Stützscheibe 44 ab, die axial durch einen Sicherungsring 45 auf der Achswelle gesichert ist. Im vormontierten Zustand begrenzt eine Anschlagscheibe 48, die durch zwei beidseitig angeordnete Sicherungsringe 49 auf der Achswelle fixiert ist, die axiale Bewegung des Zylindergehäuses 43 und des Ringkolbens 42, so dass das Differenzialsperrenmodul 16 als vormontierte Baueinheit auf der Achswelle 9 zur Verfügung gestellt werden kann.

Da die Schaltkräfte und Haltekräfte der Klauen 39, 40 sehr gering sind, kann auf eine Verdrehsicherung zwischen dem Ringkolben 42 und dem Zylindergehäuse 43 verzichtet werden. Ferner können die geringen Kräfte ohne weiteres von Bolzen 46 aufgenommen werden, die Rohranschlüsse 52 aufweisen und mit einem Flansch 50 mittels Schrauben 51 an der Achsbrücke 1 befestigt sind. Die Bolzen 46 greifen in radial gerichtete Paßbohrungen des Zylindergehäuses 43 und sind am Umfang durch Dichtringe 47 abgedichtet. Die Länge der Bolzen 46 ist so bemessen, dass auf zusätzliche Einstellelemente verzichtet werden kann. Die Fahrzeugachse kann auch mit einem Differenzialsperrmodul 16, welches somit nur auf einer Seite des Differenzialkorbes 4 angeordnet ist, ausgeführt werden. Dies ist insbesondere bei der Ausführung des Differenzialsperrmoduls 16 in Form einer Klauenkupplung der Fall.

### Bezugszeichen

- 1: Achsbrücke
- 2: Differenzialgetriebe
- 3: Lagergehäuse
- 4: Differenzialkorb
- 5: Außenkegelzahnrad
- 6: Kegelritzel
- 7: Wälzlager
- 8: Wälzlager
- 9: Achswelle
- 10: Achswelle
- 11: Kegelrad
- 12: Kegelrad
- 13: Ausgleichskegelrad
- 14: Ausgleichskegelrad
- 15: Lagerbolzen
- 16: Differenzialsperrenmodul
- 17: Differenzialsperrenmodul
- 18: Mitnahmeverzahnung
- 19: Radiallager
- 20: Zylindergehäuse
- 21: Ringkolben
- 22: Axiallager
- 23: Feder
- 24: Bolzen
- 25: Anschluß schraube
- 26: innerer Lamellenträger
- 27: äußerer Lamellenträger
- 28: Innenlamelle
- 29: Außenlamelle
- 30: Axiallager
- 31: Scheibe
- 32: Sicherungsring
- 33: Mitnahmeverzahnung
- 34: Hebel
- 35: Stützring
- 36: Lagerscheibe
- 37: Klauenträger
- 38: Klauenträger
- 39: Klaue
- 40: Klaue
- 41: Feder
- 42: Ringkolben
- 43: Zylindergehäuse
- 44: Stützscheibe
- 45: Sicherungsring
- 46: Bolzen
- 47: Dichtring
- 48: Anschlagscheibe
- 49: Sicherungsring
- 50: Flansch
- 51: Schraube
- 52: Rohranschluss

## Patentansprüche

1. Angetriebene Fahrzeugachse mit einem in eine Achsbrücke (1) eingesetztes Differenzialgetriebe (2) und mit mindestens einem Differenzialsperrenmodul (16, 17), das koaxial zu einer Achswelle (9, 10) angeordnet und mittels radial gerichteter Bolzen (24, 46) in der Achsbrücke (1) gehalten ist und dessen Sperrelemente (28, 29, 39, 40) über Mitnahmeeinrichtungen (26, 27, 37, 38) einerseits mit einem Differenzialkorb (4) und andererseits mit Kegelrädern (11, 12) des Differenzialgetriebes (2) lösbar direkt oder indirekt verbunden sind und durch einen hydraulisch betätigten Ringkolben (21) in Sperrstellung gerückt werden können, wobei der Ringkolben (21) in einem Zylindergehäuse (20) des Differenzialsperrenmoduls (16, 17) axial verschiebbar geführt ist und über ein Axiallager (22) auf die Sperrelemente (28, 29, 39, 40) wirkt, **dadurch gekennzeichnet,** dass das Zylindergehäuse (20) die Sperrelemente (28, 29) axial übergreift und die auf die Sperrelemente (28, 29) wirkenden Betätigungskräfte über ein zweites Axiallager (30) abstützt.

2. Fahrzeugachse nach Anspruch 1, **dadurch gekennzeichnet**, dass die Sperrelemente Innenlamellen (28) und Außenlamellen (29) sind und in separaten Lamellenträgern (26, 27) drehfest geführt sind, die über Mitnahmeverzahnungen (18, 33) mit der Achswelle (9, 10) bzw. dem Differenzialkorb (4) verbunden sind.

3. Fahrzeugachse nach dem Oberbegriff von Anspruch 1, **dadurch gekennzeichnet**, dass die Sperrelemente am Umfang oder an einer Stirnseite eines Klauenträgers (37, 38) angeordnete Klauen (39, 40) sind.

4. Fahrzeugachse nach Anspruch 2, **dadurch gekennzeichnet,** dass sich der auf der Achswelle (9, 10) angeordnete Klauenträger (38) über eine Feder (41) gegenüber der Betätigungskraft des Ringkolbens (21) an der Achswelle (9, 10) abstützt, wobei ein Anschlag (48, 49) die Bewegung des Differenzialsperrenmoduls (16) begrenzt.

5. Fahrzeugachse nach einem der vorhergehenden Ansprüche, **dadurch gekennzeichnet**, dass in der Achsbrücke (1) zu beiden Seiten des Differenzialgetriebes (2) jeweils ein Differenzialsperrenmodul (16, 17) angeordnet ist.

6. Fahrzeugachse nach einem der vorhergehenden Ansprüche, **dadurch gekennzeichnet**, dass der Ringkolben (21) über Hebel (34) auf das Axiallager (22) wirkt.

7. Fahrzeugachse nach einem der Ansprüche 1, 2, 5 oder 6, so weit Differenzialsperrenmodule mit Lamellen (28, 29) betroffen sind, **dadurch gekennzeichnet,** dass der Ringkolben (21) in Betätigungsrichtung durch eine Feder (23) belastet ist.

8. Fahrzeugachse nach einem der vorhergehenden Ansprüche, **dadurch gekennzeichnet**, dass die Bolzen (46) in Passbohrungen des Zylindergehäuses (20) dichtend eingesetzt und über einen Flansch (50) an der Achsbrücke (1) befestigt sind.
